# EUROPEAN PATENT APPLICATION

(11) **EP 2 757 547 A1**
(43) Date of publication of application: **23.07.2014**
(21) Application number: 14151334.1
(22) Date of filing: 15.01.2014
(51) Int. Cl.: G09G 3/00

(54) **Apparatus and method for controlling display of mobile terminal**

(30) Priority: 18.01.2013 KR 20130006007
(71) Applicant: Samsung Electronics Co., Ltd, Gyeonggi-do 443-742 (KR)
(72) Inventor: Ha, Daesung, 443-742 Gyeonggi-do (KR); Kim, Moonsoo, 443-742 Gyeonggi-do (KR)
(74) Representative: Nederlandsch Octrooibureau

(57) **Abstract**

An apparatus and a method are provided for controlling a display in a portable terminal. The apparatus for controlling a display in a portable terminal includes a display unit, a camera unit located on a side where the display unit is placed, and a controller to change a display parameter value if a distance between the portable terminal and a subject is within a preset distance value when the subject is photographed through the camera unit.

## Description

### BACKGROUND OF THE INVENTION

### 1. Field of the Invention

The present invention relates generally to an apparatus and a method for controlling a display in a portable terminal, and more particularly, to an apparatus and a method for controlling a display in a portable terminal which changes a display parameter value when a subject is positioned a short-distance to a portable terminal, and displays an image obtained based on the display parameter value.

### 2. Description of the Related Art

A portable terminal typically includes only a rear camera unit which is located in a back side where a display module is not placed. However, a recently developed portable terminal includes not only a rear camera unit but also a front camera unit which is located in a front side where a display module is placed. Accordingly, a user using a self-photographing mode through a front camera unit to take a picture can verify and photograph his own figure through an image which is outputted to a display module , and the number of such users has increased.

However, when the user photographs himself close to the front camera in the portable terminal, an Auto Exposure (AE) haunting and an Auto White Balance (AWB) haunting occur due to an influence of a display brightness. Here, an AE refers to an operation which finds an appropriate exposure value by controlling a shutter speed and a sensor gain automatically in a camera sensor to maintain the display brightness constantly even when a surrounding brightness may change. An AE haunting refers to a phenomenon where the camera sensor changes the exposure value continuously so that the display brightness is not constant and changes continuously, when a brightness of a photographing environment changes continuously. An AWB refers to an operation which changes the impression of color to a preset impression of color according to a light source color temperature that is incident on a subject automatically in the camera sensor in order to maintain the impression of color of display constantly even when the light source changes. An AWB haunting refers to a phenomenon where the camera sensor changes the impression of color continuously according to the light source color temperature so that the impression of color of display is not constant and continuously changes when the color temperature of the surrounding environment changes continuously.

### SUMMARY OF THE INVENTION

An aspect of the present invention is to provide an apparatus and a method for controlling a display in a portable terminal which changes a display parameter value, and displays an image obtained based on the display parameter value when a subject is positioned a short-distance to the portable terminal.

In accordance with an aspect of the present invention, an apparatus for controlling a display in a portable terminal includes a display unit; a camera unit located on a side of the portable terminal where the display unit is placed; and a controller configured to change a display parameter value if a distance between the portable terminal and a subject is within a preset distance value when the subject is photographed through the camera unit.

In accordance with another aspect of the present invention, a method for controlling a display in a portable terminal includes photographing a subject through a camera unit located on a side where a display unit is placed; and changing a display parameter value when a distance between the portable terminal and the subject is within a preset distance value.

### BRIEF DESCRIPTION OF THE DRAWINGS

The above and other aspects, features and advantages of the present invention will be more apparent from the following detailed description taken in conjunction with the accompanying drawings, in which:
FIG. 1 is a block diagram illustrating an internal configuration of a portable terminal 100 according to an embodiment of the present invention;
FIG. 2 is a flowchart illustrating a display control procedure according to an embodiment of the present invention;
FIG. 3 is a flowchart illustrating a distance determination operation illustrated in FIG. 2 in more detail;
FIG. 4 is a diagram illustrating a distance determination operation according to an embodiment of the present invention; and
FIG. 5 is a flowchart illustrating a display control procedure according to an embodiment of the present invention.

### DETAILED DESCRIPTION OF EMBODIMENTS OF THE INVENTION

Embodiments of the present invention will be described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present invention.

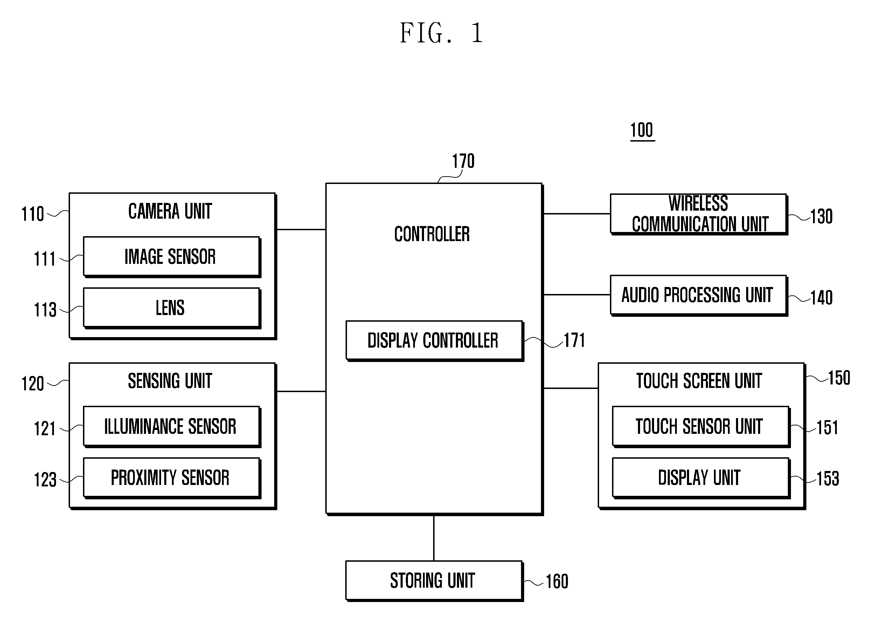

FIG. 1 is a block diagram illustrating an internal configuration of a portable terminal 100 according to an embodiment of the present invention.

Referring to FIG. 1, a portable terminal 100 according to an embodiment of the present invention includes a camera unit 110, a sensing unit 120, a wireless communication unit 130, an audio processing unit 140, a touch screen unit 150, a storing unit 160, and a controller 170.

The camera unit 110 receives a video signal. The camera unit 110 includes an image sensor 111 and a lens 113, and processes a video frame such as a still image and a video, which are obtained by the image sensor 111 in a video call mode or a photographing mode. The video frame processed in the camera unit 110 may be outputted through the display unit 153. In addition, the video frame processed in the camera unit 110 may be stored in the storing unit 160, or may be transmitted to the outside through the wireless communication unit 130.

In particular, the camera unit 110 according to an embodiment of the present invention is located on a side where the display unit 130 is placed. Of course, two or more camera units 110 may be placed according to a configuration type of the portable terminal 100. For example, the camera unit 110 may be placed on both sides, while the display unit 130 is placed on one side whether or not the display unit 130 is placed on the other side in the portable terminal 100.

The sensing unit 120 includes an illuminance sensor 121 and a proximity sensor 123. The illuminance sensor 121 measures a surrounding illuminance of the portable terminal 100. The proximity sensor 123 detects a position of an object when the object accesses

The wireless communication unit 130 performs a transmission and reception function of corresponding data for wireless communication through the portable terminal 100. The wireless communication unit 130 includes a radio frequency transmission unit which performs up conversion and amplification of the frequency of a transmitted signal, and a radio frequency reception unit which performs low noise amplification and down conversion of a received signal. In addition, the wireless communication 130 receives data through a wireless channel and outputs to the controller 170, and may transmit the data output from the controller 170 through the wireless channel.

The audio processing unit 140 may be configured as a CODEC.The CODEC may be a data CODEC which processes a packet data or the like, or particularly, an audio CODEC which processes an audio signal such as a voice. The audio processing unit 140 converts a digital audio signal into an analog audio signal through the audio CODEC to play using a speaker (SPK), and converts the analog audio signal inputted from a microphone (MIC) into the digital audio signal through the audio CODEC.

The touch screen unit 150 includes a touch sensor unit 151 and a display unit 153. The touch sensor unit 151 and the display unit 153 are formed in a mutual layer structure. The touch sensor unit 151 converts a pressure applied to a specific area of the display unit 153 or a change of capacitance generated from a specific area of the display unit 153 into an electrical input signal. At this time, the touch sensor unit 151 may detect not only a position or an area which is touched but also a pressure generated by the touch.

In other words, the touch sensor unit 151 detects a user's touch input, generates a detection signal, and delivers the signal to the controller 170. The detection signal may include a coordinate information in the display unit 153 touched by the user. When the user moves (drags) in the touch state, the touch sensor unit 151 generates the detection signal including the coordinate information of a movement route, and delivers the signal to the controller 170.

The touch sensor unit 151 may be a touch detection sensor such as a capacitive overlay, a resistive overlay, a surface acoustic wave, and an infrared beam, or a pressure detection sensor. In addition to these sensors, all kinds of the sensor units which may detect a contact or a pressure of an object may be configured as the touch sensor unit 151 in the present invention.

The display unit 153 visually provides a menu of the portable terminal 100, input data, function setting information, and other various information to the user. The display unit 153 performs a function of outputting a booting screen, a standby screen, a menu screen, a call screen, and other application screens in the portable terminal 100.

The display unit 153 may be formed of a Liquid Crystal Display (LCD), an Organic Light Emitting Diode (OLED), an Active Matrix Organic Light Emitting Diode (AMOLED), a flexible display, and a 3D display.

The storing unit 160 stores a program and data which are necessary for an operation of the portable terminal 100, and may be divided into a program area and a data area. The program area stores a program controlling an overall operation of the portable terminal 100, an Operating System (OS) for booting the portable terminal 100, an application program for the playing of multimedia content, and other option functions of the portable terminal 100, for example, an application program for a voice chatting function, a camera function, a sound play function, and an image or a video play function. The data area is an area where the data generated by a usage of the portable terminal 100 is stored, and may store an image, a video, a phone book, and an audio data.

The controller 170 controls an overall operation for each element of the portable terminal. When photographing a subject through the camera unit 110 which is located on a side where the display unit is placed, the controller 170 changes a display brightness and a display color, if the distance between the portable terminal 100 and the subject is relatively short. The controller 170 according to an embodiment of the present invention includes a display controller 171.

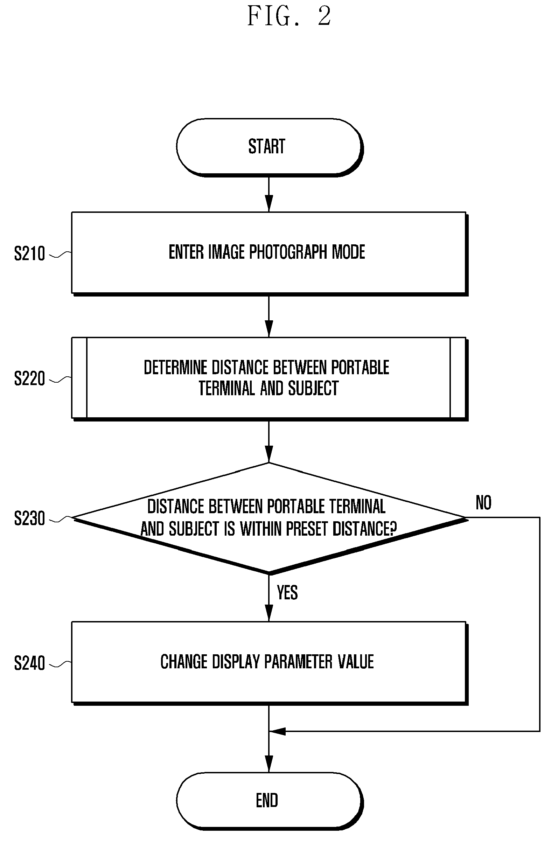

A display control procedure according to an embodiment of the present invention will be described with reference to FIG. 2.

FIG. 2 is a flowchart illustrating a display control procedure according to an embodiment of the present invention.

Referring to FIG. 2, when entering an image photographing mode in which the subject is photographed through the camera unit 110 at step S210, the display controller 171 determines a distance between the portable terminal and the subject at step S220. In other words, the display controller 171 measures a distance from the portable terminal 100 to the subject.

If the distance between the portable terminal 100 and the subject is within a preset distance value (e.g., 50cm, 1m, or the like), in step S230, the display controller 171 changes a display parameter value into a preset value in step S240. Here, the display parameter refers to a brightness parameter and/or a color parameter. For example, the brightness parameter includes a parameter for a backlight brightness of a Liquid Crystal Display (LCD), a parameter for a brightness of an Organic Light Emitting Diode (OLED), and a parameter for a brightness of a preview screen displayed through the display unit 153. The color parameter includes a parameter for a color of a Liquid Crystal Display (LCD), a parameter for a color of an Organic Light Emitting Diode (OLED), a parameter for a color of a preview screen displayed through the display unit 153, and a parameter for the impression of color in the camera unit 110. The display controller 171 may maintain the display brightness constantly as a minimum brightness, and may maintain the impression of color of display constantly as a light impression of color by changing the display parameter value into the preset value.

If the distance between the portable terminal 100 and the subject is greater than or equal to the preset distance value in step S230, the display controller 171 does not change the display parameter value.

The display controller 171 displays an image obtained through the camera unit 110 based on the display parameter value through the display unit 153.

When the distance between the portable terminal 100 and the subject is relatively short, an effect of the display brightness may be minimized by changing the display parameter value into the preset value. In other words, when the distance between the portable terminal 100 and the subject is relatively short, a brightness of the subject and a light source color temperature may be affected due to the display brightness. Accordingly, an AE haunting and an AWB haunting may occur. However, the portable terminal 100 according to the present invention may maintain the display brightness and the impression of color constantly, because the portable terminal 100 changes the display parameter value into the preset value when the subject is located close to the portable terminal 100.

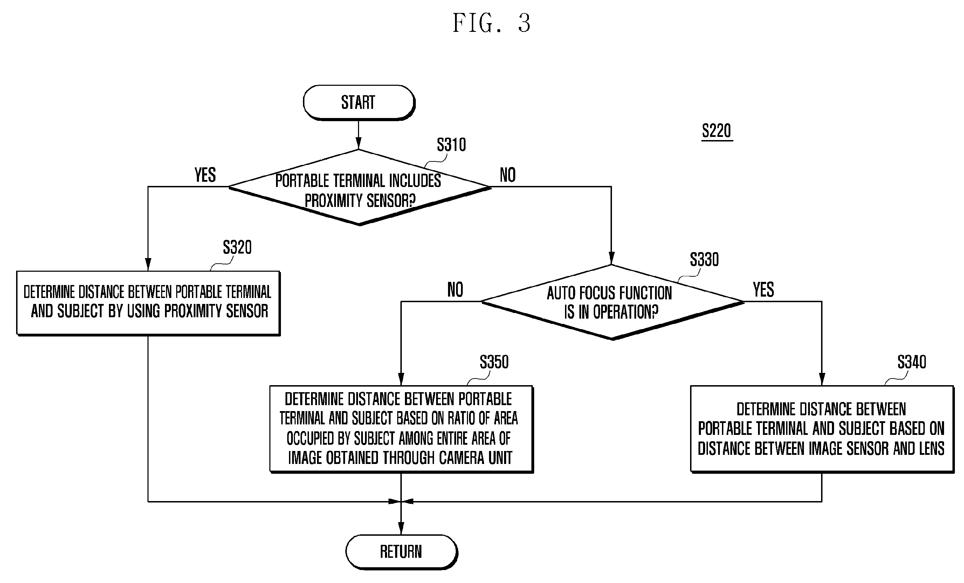

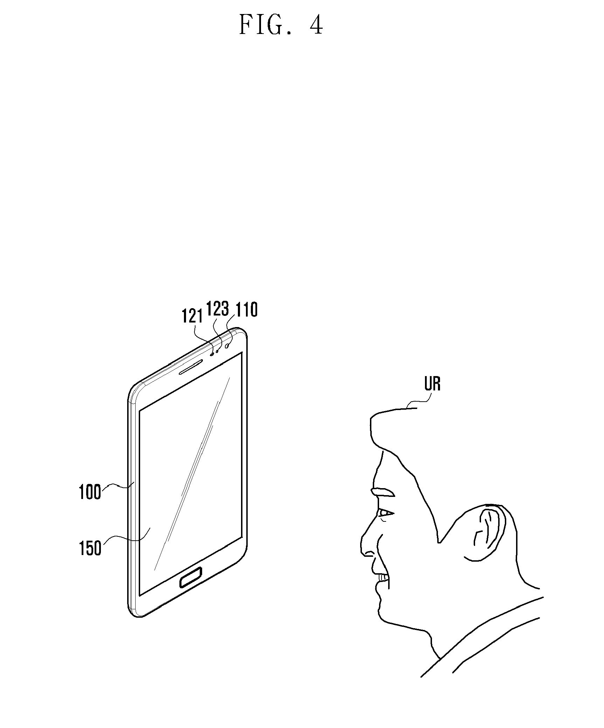

A distance determination operation between a portable terminal and a subject will be described in more detail according to an embodiment of the present invention with reference to FIGs. 3 and 4.

FIG. 3 is a flowchart illustrating a distance determination operation illustrated in FIG. 2 in more detail, and FIG. 4 is a diagram illustrating a distance determination operation according to an embodiment of the present invention.

Referring to FIG. 3, in step S310, if the portable terminal 100 includes a proximity sensor 123, the display controller 171 determines a distance between the portable terminal 100 and the subject by using the proximity sensor 123 in step S320. In other words, as illustrated in FIG. 4, the display controller 171 measures the distance between the portable terminal 100 to the subject UR based on a position of the subject UR detected through the proximity sensor 123 equipped in the portable terminal 100

On the other hand, in step S310, if the portable terminal 100 does not include the proximity sensor 123, the display controller 171 verifies whether or not an Auto Focus (AF) function is operated in step S330. If the Auto Focus function is in operation in step S330, the display controller 171 automatically focuses, and determines the distance between the portable terminal 100 and the subject based on a distance between an image sensor 111 and a lens 113 at step S340. In other words, as illustrated in FIG. 4, by automatically focusing on the center of the subject UR, the display controller 171 measures the distance from the portable terminal 100 to the subject UR by using the distance between the image sensor 111 and the lens 113 equipped in the camera unit 110.

On the other hand, if the Auto Focus function is not operated in step S330, the display controller 171 determines the distance between the portable terminal 100 and the subject based on a ratio of an area occupied by the subject to an entire area of the image obtained through the camera unit at step S350. In other words, as illustrated in FIG. 4, the display controller 171 obtains the ratio of the area occupied by the subject UR to the entire area of the image obtained by photographing the subject UR through the camera unit 110, and measures the distance from the portable terminal 100 to the subject UR by using the obtained ratio of the subject UR area.

The display controller 171 determines whether or not the distance between the portable terminal 100 and the subject UR is within the preset distance value. When using the ratio of the subject area, the display controller 171 determines that the distance between the portable terminal 100 and the subject is within the preset distance value only if the ratio of the area occupied by the subject to the entire area of the image obtained through the camera unit 110 is greater than a preset ratio (for example, 60% or the like).

In addition, when entering a short-distance photographing mode by the user's operation, the display controller 171 automatically determines that the distance between the portable terminal 100 and the subject is within the preset distance value without measuring the distance between the portable terminal 100 and the subject. For example, when entering a self-photographing mode, in general, the user photographs his own face at a short distance to the portable terminal 100. Therefore, it can be determined that the subject is within the short-distance to the portable terminal 100 without performing any separate operation measuring the distance between the portable terminal 100 and the subject.

Meanwhile, it is illustrated in FIG. 3 that the following procedures are performed: a procedure of verifying whether or not the portable terminal is equipped with a proximity sensor 123, a procedure of determining a distance to the subject by using the proximity sensor 123 according to the verification result of the existence of a proximity sensor 123 or verifying whether or not an auto focus function is operated, and a procedure of determining the distance to the subject by using a ratio of an area occupied by the subject according to the verification result of the existence of a proximity sensor 123 or determining the distance to the subject by using the distance between the image sensor 111 and the lens 113. However, the present invention is not limited thereto, and may verify first whether or not the auto focus function is operated according to an embodiment, and then, may verify whether or not the portable terminal is equipped with the proximity sensor 123. In addition, the distance may be measured by using only one of the three methods of determining the distance between the portable terminal 100 and the subject, which could be without performing a procedure of determining whether or not the proximity sensor 123 exists and a procedure of verifying whether or not the auto focus function is operated.

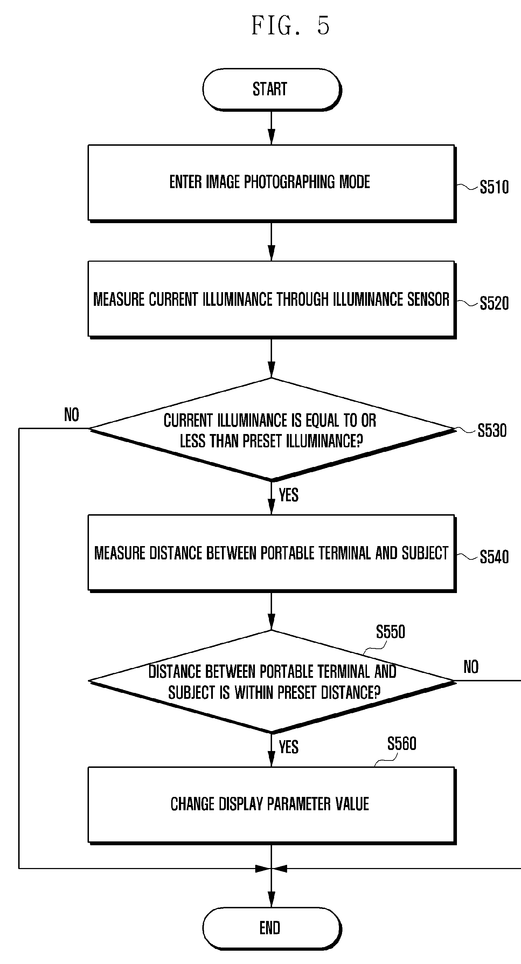

A display control procedure according to an embodiment of the present invention is described with reference to FIG. 5.

FIG. 5 is a flowchart illustrating a display control procedure according to an embodiment of the present invention.

Because the display control procedure according to an embodiment of the present invention is substantially identical to a display control procedure according to the previous embodiment, the detailed description thereof is omitted, and is described in detail only for a different part.

Referring to FIG. 5, when entering an image photographing mode in which a subject is photographed through the camera unit 110 at step S510, the display controller 171 measures a current illuminance through an illuminance sensor 121 at step S520.

If the current illuminance is less than or equal to the preset illuminance in step S530, the display controller 171 measures a distance between the portable terminal 100 and the subject at step S540. If the distance between the portable terminal 100 and the subject is within the preset distance value in step S550, the display controller 171 changes the display parameter value into the preset value at step S560.

On the other hand, If the current illuminance is greater than the preset illuminance in step S530, or the distance between the portable terminal 100 and the subject is greater than or equal to the preset distance in step S550, the display controller 171 does not change the display parameter value.

The display controller 171 displays the image obtained through the camera unit 110 based on the display parameter value through the display unit 153.

When the photographing environment is in a low illuminance state, and the distance between the portable terminal 100 and the subject is relatively short, the display parameter value may be changed into the preset value so that an effect of the display brightness may be minimized and a brightness of display and the impression of color may be maintained constantly.

It is illustrated that the controller 170 and the display controller 171 according to an embodiment of the present invention are configured as separate blocks, and each block performs a different function; however, this is only for convenience of description. For example, the controller 170 itself may also perform a specific function which is performed by the display controller 171.

As described above, the present invention may minimize an effect of display brightness and maintain the brightness of display and the impression of color constantly by changing a display parameter value into a preset value when a distance between a portable terminal and a subject is relatively short.

While the invention has been shown and described with reference to certain embodiments thereof, it will be understood by those skilled in the art that various changes in form and detail may be made therein without departing form the spirit and scope of the invention as defined by the appended claims.

## Claims

1. An apparatus for controlling a display in a portable terminal, the apparatus comprising;
a display unit;
a camera unit located on a side of the portable terminal where the display unit is placed; and
a controller configured to change a display parameter value if a distance between the portable terminal and a subject is within a preset distance value when the subject is photographed through the camera unit.

2. The apparatus of claim 1, further comprising:
a sensing unit including an illuminance sensor,
wherein the controller is configured to change the display parameter value, when a current illuminance measured through the illuminance sensor is less than or equal to a preset illuminance, and a distance between the portable terminal and the subject is within a preset distance value.

3. The apparatus of claim 2, wherein the display parameter is a brightness parameter or/and a color parameter.

4. The apparatus of claim 1, further comprising:
a sensing unit including a proximity sensor,
wherein the controller is configured to determine a distance between the portable terminal and the subject by using the proximity sensor.

5. The apparatus of claim 1, wherein the controller is configured to determine a distance between the portable terminal and the subject based on a ratio of an area occupied by the subject to an entire area of an image obtained through the camera unit.

6. The apparatus of claim 1, wherein the camera unit includes an image sensor and a lens, and
wherein the controller is configured to determine a distance between the portable terminal and the subject based on a distance between the image sensor and the lens.

7. The apparatus of claim 1, wherein the controller is configured to determine that a distance between the portable terminal and the subject is within a preset distance value when entering a short-distance photographing mode by a user's operation.

8. A method for controlling a display in a portable terminal, the method comprising:
photographing a subject through a camera unit located on a side where a display unit is placed; and
changing a display parameter value when a distance between the portable terminal and the subject is within a preset distance value.

9. The method of claim 8, further comprising:
measuring a current illuminance through an illuminance sensor which is equipped in the portable terminal,
wherein changing the display parameter value comprises changing the display parameter value into a preset display parameter value, when the current illuminance measured through the illuminance sensor is less than or equal to a preset illuminance and a distance between the portable terminal and the subject is within the preset distance value.

10. The method of claim 9, wherein the display parameter is a brightness parameter and/or a color parameter.

11. The method of claim 8, wherein changing the display parameter value comprises determining a distance between the portable terminal and the subject by using a proximity sensor equipped in the portable terminal.

12. The method of claim 8, wherein changing the display parameter value comprises determining a distance between the portable terminal and the subject based on a ratio of an area occupied by the subject to an entire area of an image obtained through the camera unit.

13. The method of claim 8, wherein the camera unit includes an image sensor and a lens, and changing the display parameter value comprises determining a distance between the portable terminal and the subject based on a distance between the image sensor and the lens.

14. The method of claim 8, wherein when entering a short-distance photographing mode by a user's operation, changing the display parameter value comprises determining that a distance between the portable terminal and the subject is within a preset distance value.
